# EUROPEAN PATENT SPECIFICATION

(11) **EP 1 783 847 B1**
(45) Date of publication and mention of the grant of the patent: **25.12.2013**
(21) Application number: 05743902.8
(22) Date of filing: 27.05.2005
(51) Int. Cl.: H01M 4/48, H01M 4/02, H01M 10/052, H01M 4/04, H01M 4/131, H01M 4/485

(54) **SiO POWDER FOR SECONDARY BATTERY**
SIO-PULVER FÜR EINE SEKUNDÄRBATTERIE
POUDRE DE SiO POUR BATTERIE SECONDAIRE

(30) Priority: 29.07.2004 JP 2004221816
(43) Date of publication of application: 09.05.2007
(73) Proprietor: OSAKA Titanium Technologies Co., Ltd., Amagasaki-shi, Hyogo 660-8533 (JP)
(72) Inventor: KIZAKI, Shingo c/o Sumitomo Titanium Corporation, Amagasaki-shi, Hyogo 6608533 (JP); NISHIOKA, Kazuo c/o Sumitomo Titanium Corporation, Amagasaki-shi, Hyogo 6608533 (JP)
(74) Representative: Jackson, Martin Peter
(86) International application number: PCT/JP2005/009773
(87) International publication number: WO 2006/011290

(56) References cited:
- EP-A1- 0 840 386
- JP-A- 11 067 203
- JP-A- 2000 195 555
- JP-A- 2002 260 651
- A.E. HILL AND G.R. HOFFMAN: "STRESS IN FILMS OF SILICON MONOXIDE", BRIT. J. APPL .PHYS., vol. 18, 1967, pages 13-22, XP002632648,

## Description

### Technical Field

The present invention relates to a silicon monoxide powder and a producing method thereof, suitable for a negative-electrode material of a lithium secondary battery in which lithium can be occluded and released with a lithium-ion conductive nonaqueous electrolyte.

### Background Art

Recently, with rapid progress of portable electronic instruments, communication devices and the like, development of the secondary battery having high energy density is strongly demanded from the view points of economic efficiency, and miniaturization and weight reduction of the instrument. Examples of the secondary battery having high energy density include a nicad (nickel-cadmium) battery, a nickel-hydrogen battery, a lithium-ion secondary battery, and a polymer battery. Among others, compared with the nicad battery and the nickel-hydrogen battery, the lithium-ion secondary battery (hereinafter simply referred to as "lithium secondary battery") has dramatically high lifetime and high capacity, so that the demand of the lithium secondary battery exhibits strong growth in a battery market.

In an operational principle of the lithium secondary battery, the lithium ion is moved back and forth between a positive electrode and a negative electrode by charge and discharge, and the structural forms of positive-electrode material and negative-electrode material are not changed by the charge and discharge unlike a metallic lithium battery which is of a primary battery.
On the other hand, it is said that the polymer battery has the smaller energy density than the lithium secondary battery. However, the polymer battery can be formed in a sheet shape having a thickness of not more than 0.3 mm using the same components as the lithium-ion battery such as the positive electrode, the negative electrode, and a solid-state or gel electrolyte. Therefore, because a package is easily produced, it is expected that the polymer battery is formed in a thin compact style. In consideration of characteristics of the polymer battery, the lithium secondary battery in which heat resistance and liquid-leakage resistance are improved, while the polymer is used, as the electrolyte is increasingly demanded.

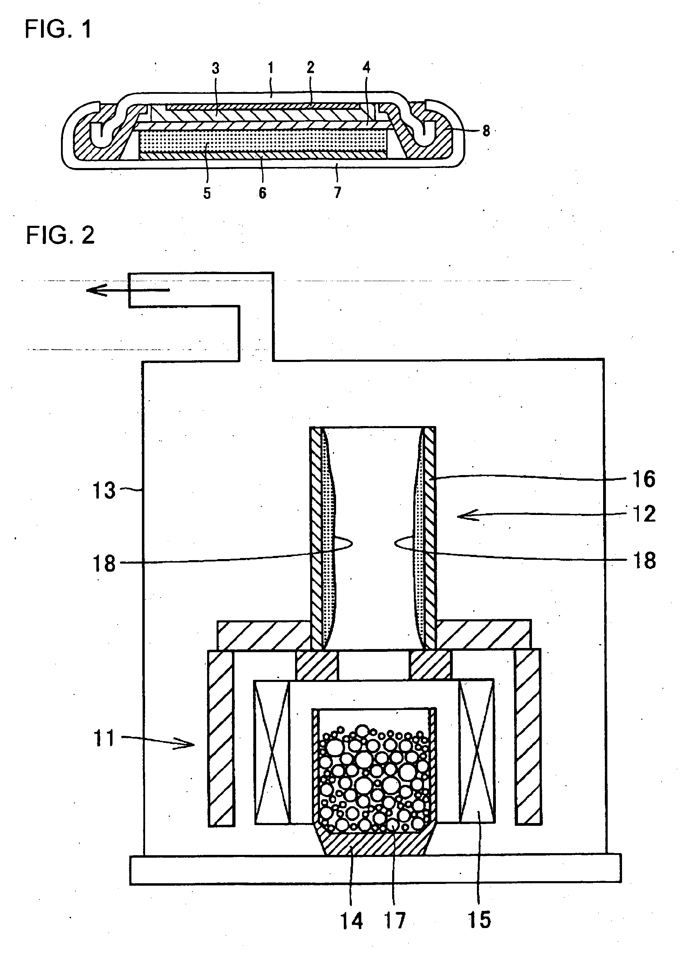

As shown in after-mentioned Fig. 1, the lithium secondary battery includes a positive electrode, a negative electrode, an electrolyte, and a separator. Examples of the positive electrode of the lithium secondary battery include lithium cobalt oxide (LCoO₂) and manganese spinel (LiMn₂O₄). An example of an electrolytic solution which is used as the electrolyte includes a nonaqueous electrolytic solution such as lithium perchlorate mainly containing an organic solvent. The separator is structured by film which separates the positive electrode and the negative electrode to prevent a short circuit between the positive electrode and the negative electrode.

It is necessary that energy to be taken out per unit weight or unit volume be large in the negative electrode to be used in the lithium secondary battery. Conventionally, for example, a composite oxide of lithium and boron, a composite oxide of lithium and transition metal (such as V, Fe, Cr, Co, and Ni), carbon materials, and graphite materials are used as the negative-electrode material of the lithium secondary battery, and an alloy in which metallic silicon not lower than 50% at a molar ratio is composed and any one of Ni, Fe, Co, and Mn is contained is proposed as the negative-electrode material of the lithium secondary battery. A method, in which a compound containing nitrogen (N), oxygen (O), and any one of elements out of Si, Ge, and Sn is carbonized with graphite and a surface of a silicon particle is coated with the carbon layer by a chemical vapor deposition process, is also proposed as the negative-electrode material producing method.

However, in the proposed negative-electrode materials, although the charge and discharge capacity can be improved to increase the energy density, dendrite or a passive-state compound is generated on the electrode in association with the charge and discharge, and deterioration becomes remarkable by the charge and discharge, or expansion and contraction becomes intensive during adsorbing or desorbing the lithium ion, which results in an insufficient durability (cycle property) of the discharge capacity for the repeated charge and discharge. Therefore, the characteristics of the conventional lithium secondary battery do not always satisfy the requirements, and the further improvement is demanded in the energy density.

In order to deal with such demands, an attempt is made to use silicon oxides such as silicon monoxide as a negative-electrode material. An electrode potential of the silicon oxide becomes lower (mean) to the lithium. In the silicon oxide, the deterioration such as collapse of a crystal structure and the generation of irreversible substance caused by the occlusion and release of the lithium ion does not occur during the charge and discharge, and the lithium ion can reversibly be occluded and released. Therefore, the silicon oxide has a potential to become the negative-electrode active material having the larger effective charge and discharge capacity. Accordingly, it is expected that using the silicon oxide as the negative-electrode active material enables to obtain the secondary battery having the high voltage, high energy density, excellent charge and discharge characteristics, and the long durable (cycle) lifetime of the discharge capacity.

Conventionally, various proposals in which silicon oxide is used as the negative-electrode material are made as the attempt concerning the negative-electrode material as above. For example, Japanese Patent No. 2997741 discloses a nonaqueous electrolyte secondary battery, in which silicon oxide which can occlude and release lithium ion is used as the negative-electrode active material. In the silicon oxide disclosed in Japanese Patent No. 2997741, the lithium is contained in a crystalline structure or an amorphous structure, and a composite oxide of lithium and silicon is formed such that the lithium ion can be occluded and released in the nonaqueous electrolyte by an electrochemical reaction.
However, in the secondary battery disclosed in Japanese Patent No. 2997741, although the negative-electrode active material having the high capacity can be obtained, according to the study of the present inventors, the irreversible capacity becomes large in the initial charge and discharge and the durability (cycle property) of the discharge capacity does not reach a practical use level. Therefore, in the practical use, there is still room for improvement.

Japanese Patent Application Publication No. 2000-243396 discloses a lithium secondary battery and a producing method thereof, in which the negative-electrode active material includes carbonaceous particles and oxide particles containing at least one element selected from Si, Sn, Ge, Al, Zn, Bi and Mg and said oxide particles are embedded in said carbonaceous particles.
However, in producing the lithium secondary battery disclosed in Japanese Patent Application Publication No. 2000-243396, as described in the embodiment, a composite powder which is of the raw material is formed by repeatedly performing mechanical pressure bonding between the amorphous silicon monoxide particles and natural graphite particles to embed the silicon monoxide particles in the graphite particles, and the composite powder is formed to the negative electrode by pressure-forming. Therefore, although the electrical conductivity can be imparted to the pressure-formed negative-electrode material, the carbon film is not evenly formed because the negative-electrode material is formed by mechanical pressure-bonding the solid-state substance with each other, which results in a problem that the homogeneous electrical conductivity cannot be secured.

Japanese Patent Application Publication No. 2001-118568 discloses a nonaqueous secondary battery, in which the composition of the negative-electrode active material which can occlude and release the lithium ion is defined by SiOₓ (x=1.05 to 1.60) and the negative-electrode active material is formed by spherical powder whose specific surface area is not less than 20 m²/g. Thus, it is alleged that the nonaqueous secondary battery is obtained with the extremely large charge and discharge capacity and the long durable (cycle) lifetime of the discharge capacity.
Japanese Patent Application Publication No. 2002-260651 discloses a silicon oxide powder and a producing method thereof, in which the composition of the negative-electrode active material which can occlude and release the lithium ion is defined by SiOₓ (x=1.05 to 1.5) and the negative-electrode active material is formed by spherical silicon oxide powder whose BET specific surface area ranges from 5 to 300 m²/g. It is alleged that by adopting said structure, the lithium secondary battery is obtained with high capacity and the excellent durability (cycle property) of the discharge capacity.

In the negative-electrode active material disclosed in Japanese Patent Application Publication Nos. 2001-118568 and 2002-260651, when the silicon oxide is used as the negative-electrode material, the irreversible capacity in the initial charge and discharge and the durability (cycle property) of the discharge capacity are improved by appropriately setting a value of x in the SiOₓ composition, the specific surface area, the powder shape or the like. However, the volume expansion associated with the adsorption and desorption of the lithium ion cannot be alleviated, which results in a problem that the durability (cycle property) of the discharge capacity cannot sufficiently be secured as the negative-electrode material of the lithium secondary battery.

### Disclosure of the Invention

The present invention is achieved in view of the problems when the silicon oxide is used as the negative-electrode material for the above-mentioned lithium secondary battery. It is an object of the present invention to provide a silicon monoxide powder suitable for a negative-electrode active material for lithium-ion secondary battery having the high capacity, exhibiting small decrease in discharge capacity (deterioration of cycle property) caused by the repeated charge and discharge, and being able to endure the practical use by employing a hydrogen-containing silicon monoxide powder as the silicon oxide for the negative-electrode material, and a method for efficiently producing the silicon monoxide powder.

The present inventors repeatedly perform various experiments to solve the problems to analyze a mechanism of the cycle property deterioration in the negative-electrode material of the lithium secondary battery. As a result, the present inventors find that the cycle property deterioration is caused by the occurrence of the expansion and contraction of the electrode due to the adsorption and desorption of the lithium ion and thereby the conductivity of the electrode is decreased by contact failure with the conductive material in association with the expansion and contraction.

The present inventors study the optimum composition of the silicon oxide for the negative-electrode material in order to alleviate the volume expansion which causes the decrease in conductivity of the electrode. As a result, the present inventors find the negative-electrode active material, in which the volume expansion is decreased by containing hydrogen in the silicon monoxide powder and thereby the deterioration of the cycle property can be suppressed without generating the network breakage.

That is, in the case where the silicon monoxide powder is used as the negative-electrode material, the expansion and contraction of the electrode can be decreased by setting the hydrogen concentration contained in the silicon monoxide powder to a predetermined level beyond a typical concentration, even if the charge and discharge are repeated. Therefore, the conductive network is not broken and the deterioration of the cycle property can be prevented. Specifically, the improvement effect begins to show when hydrogen content is set to about 60 ppm, and the durability (cycle property) of the discharge capacity can sufficiently be secured when the hydrogen content is set to 80 ppm or more.

The present invention is completed based on the above findings and the present invention mainly includes the following (1), (2) and (3):
(1) A silicon monoxide powder for use in a negative electrode material in a lithium secondary battery characterized in that the silicon monoxide powder has a hydrogen content of not less than 80 ppm; and
(2) A negative electrode material for a lithium secondary battery comprising the silicon monoxide powder of (1);
(3) A lithium secondary battery comprising the silicon monoxide powder of claim 1 as a negative electrode material.

According to the silicon monoxide powder of the present invention, the hydrogen content is increased when the negative-electrode material of the lithium secondary battery is constructed by the silicon monoxide powder of the present invention along with a graphite particle and a bonding agent. Therefore, the discharge capacity and the cycle capacity durability rate can dramatically be improved, and the miniaturization and cost reduction of the lithium secondary battery can be achieved. Furthermore, because the silicon monoxide powder of the present invention can efficiently be produced, the production costs such as the electric power cost can largely reduced.

### Brief Description of the Drawings

Fig. 1 shows a configuration of a coin-shaped lithium secondary battery in which a silicon monoxide powder according to the present invention is used as the negative-electrode material; and
Fig. 2 shows a configuration of a production apparatus used in a silicon monoxide powder producing method.

### Best Mode for Carrying out the Invention

A silicon monoxide powder according to the present invention for use in a negative-electrode material in a lithium secondary battery and a raw material silicon powder of the silicon monoxide powder will be described below.

Fig. 1 shows a configuration of a coin-shaped lithium secondary battery in which a silicon monoxide powder according to the present invention is used as the negative-electrode material. As shown in Fig. 1, the lithium secondary battery includes a positive electrode, a negative electrode, a lithium-ion conductive nonaqueous electrolytic solution or polymer electrolyte, and a separator 4, the negative electrode including a negative-electrode active material which can occlude and release the lithium ion. The positive electrode includes a counter-electrode case 1, a counter-electrode collector 2, and a counter electrode 3. The separator 4 is constructed by a polypropylene porous film where an electrolytic solution is impregnated. The negative electrode includes a working electrode 5, a working-electrode collector 6, and a working-electrode case 7.

In Fig. 1, the counter-electrode case 1 which is also used as a counter-electrode terminal is formed by drawing of a stainless steel plate in which nickel plating is performed onto one of outside surfaces. The counter-electrode collector 2 formed by a stainless steel net is connected to the counter-electrode case 1 by spot welding. In the counter electrode 3, an aluminum plate having a predetermined thickness is punched in a diameter of 15 mm and fixed to the counter-electrode collector 2, a lithium foil having a predetermined thickness is punched in a diameter of 14 mm, and the lithium foil is fixed onto the aluminum plate by pressure bonding. The stainless steel working-electrode case 7 in which nickel plating is performed onto one of outside surfaces is also used as a counter-electrode terminal.

The working electrode 5 is made of an after-mentioned active material according to the present invention, and the working electrode 5 and the working-electrode collector 6 formed by the stainless steel net are integrally pressure-formed. A gasket 8 mainly made of polypropylene is interposed between the counter-electrode case 1 and the working-electrode case 7. The gasket 8 maintains the electric insulation between the counter electrode 3 and the working electrode 5, and the gasket 8 confines and seals the battery contents by bending and caulking an opening edge of the working-electrode case 7 toward the inside.

For example, a solution in which LiPF₆ of 1 mole/l is dissolved in a mixture solvent of ethylene carbonate and dimethyl carbonate at a volume ratio of 1:3 can be used as the electrolytic solution to be impregnated in the separator 4. In the configuration of the lithium secondary battery shown in Fig. 1, the battery can be formed to have an outer diameter of about 20 mm and a thickness of about 1.6 mm.
The active material used in the working electrode 5 can be constructed by a mixture of the silicon monoxide powder of the present invention having the hydrogen content of not less than 80 ppm, acetylene black which is of a conductive additive, and polyvinylidene fluoride which is of a binder. For example, an apportion ratio of the mixture can be set at 70:10:20.

The conventional silicon powder contains the hydrogen concentration of about 10 ppm. On the other hand, the silicon powder having the hydrogen content of not less than 30 ppm can be adopted as the raw material silicon powder of the present invention, and the silicon monoxide powder whose hydrogen content is not less than 80 ppm can be produced by the producing method of the present invention. Desirably the hydrogen content is set to 50 ppm or more in the raw material silicon powder. Thus, the silicon monoxide powder of the present invention can be produced more stably.

The present invention does not particularly limit a particle size of the silicon powder, and a common particle size is adequate, but desirably the average particle size ranges from 1 to 40 µm in order to ensure the stable quality and characteristics.
The hydrogen content of the silicon monoxide powder or silicon powder is measured at a temperature increase rate of 0.5 °C/sec with a temperature-programmed desorption gas analysis apparatus (TDS) by a mass fragment method.

With reference to the measurement of the hydrogen content of the silicon monoxide powder and raw material silicon powder, for example, when the silicon dioxide powder and the silicon powder with the hydrogen content of 30 ppm are combined, the hydrogen content of the obtained silicon monoxide powder becomes 80 ppm or more by the producing method described herein. This is attributed to the fact that the hydrogen contained in the silicon powder is not completely released due to strong bonding force of the silicon to the hydrogen. The present inventors confirm that there is a correlation between the hydrogen content in silicon measured by the above method and the hydrogen content in the silicon monoxide powder obtained by using the silicon as the raw material.

The silicon monoxide powder of the present invention is produced: the silicon powder having predetermined hydrogen content and the silicon dioxide powder are mixed together at a molar ratio of 1:1; the mixture is granulated and dried, and the mixture is loaded in a raw material vessel provided in a production apparatus; then, the mixture is heated and sublimated in an inert gas atmosphere or in a vacuum; and the gaseous silicon monoxide is deposited on a deposition substrate.

Specifically, the silicon monoxide powder producing method of the present invention, characterized in that the silicon dioxide powder and the silicon powder with a hydrogen content of not less than 30 ppm are mixed, the mixture is heated to temperatures of 1250 to 1350 °C to vaporize the silicon monoxide to be deposited on the deposition substrate, and the deposited silicon monoxide is crushed.

Fig. 2 shows a configuration of a production apparatus used in a silicon monoxide powder producing method. The production apparatus includes a raw material chamber 11 located in a lower portion and a deposition chamber 12 located in an upper portion. The raw material chamber 11 and the deposition chamber 12 are installed in a vacuum chamber 13. The raw material chamber 11 is constructed by a cylindrical body, a cylindrical raw material vessel 14 is placed in the center of the cylindrical body, and for example a heat source 15 formed by an electric heater is arranged so as to surround the raw material vessel 14.

The deposition chamber 12 is constructed by a cylindrical body which is coaxial with the raw material vessel 14. A stainless steel deposition substrate 16 is provided in the deposition chamber 12, and the gaseous silicon monoxide sublimated in the raw material chamber 11 is deposited on an inner peripheral surface of the cylindrical deposition substrate 16. A vacuum device (not shown) is provided in the vacuum chamber 13 which accommodates the raw material chamber 11 and deposition chamber 12. The vacuum device evacuates the atmospheric gas or applies vacuum-pumping in an arrow direction of Fig. 1. A degree of vacuum in the production apparatus is not particularly limited, but the condition usually used in producing the silicon monoxide vapor deposition material may be adopted.

In producing the silicon monoxide powder of the present invention, the production apparatus shown in Fig. 2 is used, the raw material vessel 14 is filled with a mixed granulation raw material 17 of the silicon dioxide powder and hydrogen-containing silicon powder or the silicon dioxide powder and hydrogen-containing silicon fine powder, the raw material vessel 14 is heated in the inert gas atmosphere or in a vacuum, and the silicon monoxide is generated and sublimated by reaction. The generated gaseous silicon monoxide rises from the raw material chamber 11 into the deposition chamber 12, and the gaseous silicon monoxide is deposited on the inner peripheral surface of the deposition substrate 16 to form the deposited silicon monoxide (designated by the reference numeral 18 in Fig. 2). Then, the deposited silicon monoxide 18 is taken out from the deposition substrate 16, and the deposited silicon monoxide 18 is crushed to yield the silicon monoxide powder.

In the silicon monoxide powder producing method, the mixed granulation raw material 17 loaded in the raw material vessel 14 of the production apparatus is sublimated by heating the mixed granulation raw material 17 to temperatures of 1250 to 1350 °C to deposit the gaseous silicon monoxide onto the deposition substrate 16. When the mixed granulation raw material 17 is heated to temperatures less than 1250 °C, the silicon monoxide cannot sufficiently be sublimated. When the mixed granulation raw material 17 is heated to temperatures more than 1350 °C, it is difficult to evenly deposit the gaseous silicon monoxide.

In the silicon monoxide powder producing method of the present invention, desirably the mixed granulation raw material 17 is heated from room temperature to temperatures of 800 to 1200 °C and held for at least two hours to perform drying and degassing of the mixed granulation raw material 17, before the mixed granulation raw material 17 loaded in the raw material vessel 14 of the production apparatus is heated to temperatures of 1250 to 1350 °C. Furthermore, in order to efficiently deposit the sublimated silicon monoxide on the deposition substrate 16, desirably the deposition substrate 16 is held at temperatures of 200 to 600 °C.

The deposited silicon monoxide obtained by the producing method of the present invention contains the hydrogen ranging from 120 ppm to 1% (10000 ppm). The hydrogen gas content of the silicon monoxide powder is slightly decreased, because the hydrogen contained in the surface of the deposited silicon monoxide is released when the deposited silicon monoxide is transformed into the silicon monoxide powder, but still can be used as the silicon monoxide powder of the present invention.

The raw material silicon powder for the silicon monoxide powder of the present invention is obtained as follows. A high-purity silicon wafer is mechanically and coarsely crushed with a cutter mill, a hammer mill, or the like. The coarsely crushed silicon further is finely ground with a jet mill, a colloid mill, a ball mill or the like to obtain the silicon powder, and the silicon powder is put through a sieve. Then, in the inert gas atmosphere containing at least 1% hydrogen gas, the heat treatment is performed to the silicon powder at temperatures of not less than 500 °C for at least three hours to obtain the raw material silicon powder.
In producing the raw material silicon powder, the hydrogen content of the raw material silicon powder can be controlled by adjusting solely any of the hydrogen gas content in the inert gas, the heating temperature, or the treatment time, or in combination with each other.

Thus, the hydrogen containing silicon monoxide powder, raw material silicon powder, and silicon monoxide producing method are described. Alternatively, a hydrogen containing silicon dioxide powder producing method may be used as another method for producing the raw material silicon powder.
Next, a method for causing the silicon powder in the mixed granulation raw material for conventional silicon monoxide vapor deposition to contain the hydrogen in the silicon may also be used. And, a method for imparting the hydrogen during the production process of the silicon monoxide by using the conventional mixed granulation raw material can be considered. That is, the raw material is heated in the inert gas atmosphere containing the hydrogen gas or in the hydrogen gas atmosphere and sublimated to deposit the silicon monoxide.

### Examples

The effect exerted by using the hydrogen-containing silicon monoxide powder of the present invention as the negative-electrode material of the lithium secondary battery will be described below based on specific inventive examples and comparative examples.
The coin-shaped lithium secondary battery shown in Fig. 1 is used in an evaluation test with the inventive examples and comparative examples. Four kinds of the silicon monoxide powders in which hydrogen content is set to about 80 ppm, about 100 ppm, about 200 ppm, and about 300 ppm respectively are used as the negative-electrode material of the examples. Three kinds of the silicon monoxide powders in which each hydrogen content is set to about 30 ppm, about 40 ppm, and about 50 ppm are used as the negative-electrode material of the comparative examples.

The coin-shaped lithium secondary battery is produced to evaluate the characteristics of the lithium secondary battery, and the examples and the comparative examples are compared in the discharge capacity and the cycle capacity durability rate. The cycle capacity durability rate shall mean a ratio (%) of the discharge capacity in the 100th cycle to the discharge capacity in the first cycle. Table 1 shows the comparison result of the examples and comparative examples in the discharge capacity and the cycle capacity durability rate.

[Table 1]

**Table 1**

| | Hydrogen content in silicon monoxide powder (ppm) | Discharge capacity (mAh/g) | Cycle capacity durability rate (%) |
|---|---|---|---|
| Inventive Examples | 81 | 400 | 65.7 |
| | 101 | 416 | 71.2 |
| | 211 | 457 | 80.6 |
| | 299 | 501 | 92.5 |
| Comparative examples | *30 | 320 | 48.1 |
| | *51 | 386 | 50.4 |
| | *43 | 457 | 46.5 |
| Remark: data designated by * shows that the data is out of the conditions defined by the present invention | | | |

As can be seen from Table 1, in all the silicon monoxide powders of the inventive examples, the hydrogen content in the silicon monoxide powder is not less than 80 ppm which satisfies the condition defined by the present invention, and the cycle capacity durability rate becomes not less than 65%, so that the silicon monoxide powders of the examples exert the excellent cycle property.
On the contrary, in the silicon monoxide powders of the comparative examples, the hydrogen content in the silicon monoxide powder ranged from 30 to 51 ppm which is out of the condition defined by the present invention. Therefore, because the cycle capacity durability rate ranges from 46.5 to 50.4% while the discharge capacity can relatively ensured, the durerability (cycle property) of the discharge capacity cannot sufficiently be exerted.

### Industrial Applicability

According to the silicon monoxide powder of the present invention, the hydrogen content is increased when the negative-electrode material of the lithium secondary battery is constructed by the silicon monoxide powder of the present invention. Therefore, the discharge capacity and the cycle capacity durability rate can dramatically be improved, and the miniaturization and cost reduction of the lithium secondary battery can be achieved. Furthermore, because the silicon monoxide powder of the present invention can efficiently be produced, the production costs such as the electric power cost can largely be reduced. Therefore, the silicon monoxide powder can be widely applied to the silicon monoxide powder for secondary battery.

## Claims

1. A silicon monoxide powder for use in a negative electrode material in a lithium secondary battery **characterized in that** the silicon monoxide powder has a hydrogen content of not less than 80 ppm.

2. A negative electrode material for a lithium secondary battery comprising the silicon monoxide powder of claim 1.

3. A lithium secondary battery comprising the silicon monoxide powder of claim 1 as a negative electrode material.

## Patentansprüche

1. Siliziummonoxidpulver zur Verwendung in einem Negativelektrodenmaterial in einer Lithium-Sekundärbatterie, **dadurch gekennzeichnet, dass** das Siliziummonoxidpulver einen Wasserstoffanteil von nicht weniger als 80 ppm aufweist.

2. Negativelektrodenmaterial für eine Lithium-Sekundärbatterie, welches das Siliziummonoxidpulver nach Anspruch 1 umfasst.

3. Lithium-Sekundärbatterie, welche das Siliziummonoxidpulver nach Anspruch 1 als Negativelektrodenmaterial umfasst.

## Revendications

1. Poudre de monoxyde de silicium destinée à être utilisée dans un matériau d'électrode négative d'une batterie rechargeable au lithium, **caractérisée en ce que** la poudre de monoxyde de silicium a une teneur en hydrogène supérieure ou égale à 80 ppm.

2. Matériau d'électrode négative pour batterie rechargeable au lithium comprenant la poudre de monoxyde de silicium de la revendication 1.

3. Batterie rechargeable au lithium comprenant la poudre de monoxyde de silicium de la revendication 1 comme matériau d'électrode négative.
